Europäisches Patentamt

European Patent Office

Office européen des brevets

(19)

(11) Numéro de publication: **0 080 962**
**A1**

(12)

# DEMANDE DE BREVET EUROPEEN

(21) Numéro de dépôt: 82440041.0

(22) Date de dépôt: 24.11.82

(51) Int. Cl.³: **B 62 B 7/10**

(30) Priorité: 27.11.81 FR 8122689

(43) Date de publication de la demande:
08.06.83 Bulletin 83/23

(84) Etats contractants désignés:
AT BE CH DE FR GB IT LI LU NL SE

(71) Demandeur: De Ruyter, Jackie André
32, rue de la Cigale
F-68200 Mulhouse(FR)

(71) Demandeur: Vinel, Roger
38 Avenue Parmentier
F-75011 Paris 11eme(FR)

(72) Inventeur: De Ruyter, Jackie André
32, rue de la Cigale
F-68200 Mulhouse(FR)

(72) Inventeur: Vinel, Roger
38 Avenue Parmentier
F-75011 Paris 11eme(FR)

(54) Dispositif de poussette pliante à plat.

(57) L'invention concerne les poussettes ou les landaus
pliants à plat, et permet un encombrement réduit du fait que
tous les éléments tubulaires du chassis se logent sous
l'espace d'encombrement du siège.

Il comprend des tubes avant (1), des tubes arrières (3),
des tubes supérieurs (5) parallèles et articulés aux chappes
centrales de pliage (7). Des compas de blocage (12) verrouillent le dispositif en position ouverte en coopérant avec des
biellettes (8) et (10) et des guides (9) coulissant sur les tubes
arrières (3). Lors du pliage du mécanisme, des biellettes (11)
fixées d'une part aux tubes (3) entraînent le chassis du siège
(14) vers le haut des tubes (5) afin de regrouper l'ensemble
du chassis sous le siège.

L'invention sera utilisée avantageusement sur les poussettes et les landaus pliables devant être logés dans un
espace réduit.

Fig 1

EP 0 080 962 A1

Croydon Printing Company Ltd.

Dispositif de poussette pliante à plat.

La présente invention est relative aux poussettes et landaus pliables pour enfants. Elle concerne en particulier d'une manière générale les chassis repliables dont les éléments se rassemblent suivant une position " à plat ".

De telles poussettes permettent la réduction de volume la plus grande possible, de façon à ramener l'encombrement au volume minimum . Elles doivent cependant en période d'utilisation, offrir les conditions normales de confort et de sécurité pour l'enfant.

On connaît déjà des poussettes pliantes à plat, notamment celles qui sont relatives aux dispositions des demandes de brevet français N° 74 13 665, de brevet américain N° 3 797 848, et de brevet anglais N° 1 419 799.

Ces trois brevets cités décrivent tous des poussettes constituées d'une ossature formée de trois cadres en U , soit deux cadres supportant chacun un roulement et un cadre constituant le guidon. Ces cadres sont différemment articulés dans chacun de ces brevets, mais la fermeture s'effectue toujours par rabattement du cadre guidon vers l'avant. Le siège non inclinable est tendu sur des traverses fixées respectivement sur le cadre du bas et sur le cadre guidon. Ces dispositifs sont assez dépouillés et ne permettent pas de placer une nacelle landau sur le chassis.

La présente invention se propose d'offrir un dispositif de poussette pliante à plat, qui présente un encombrement réduit à l'état replié, et qui en utilisation offre les commodités d'un siège inclinable en toutes positions et réversible pour avoir le bébé, soit vers la route, soit vers la maman ; permettant de fixer une nacelle landau ; et offrant la particularité en position semi-ouverte de pouvoir être utilisée en "Transat" ou en " Siège Auto " . La triangulation de pliage, et le nombre réduit des éléments qui la composent permettent un coût de fabrication compétitif en raison de la simplicité de sa construction.

Dans ce but, le dispositif objet de l'invention se caractérise par le fait qu'il comporte en combinaison une paire de tubes avant, une paire de tubes arrières et une paire de tubes supérieurs, articulés entre eux au niveau d'une chappe centrale sur chaque côté du chassis ; un élément de chassis en forme de U supportant le siège ou la nacelle du landau , fixé de manière pivotante sur deux supports moletés coulissant sur les tubes supérieurs, et guidés par deux biellettes articulées à leur autre extrémité sur les tubes arrières , dans leur partie supérieure ; deux compas , reliant les tubes arrières et les tubes avant verrouillent le dispositif en position ouverte ; deux biellettes de pliage articulées à leurs extrémités, d'une part aux tubes supérieurs et d'autre part à un guide mobile sur les tubes arrières, coopèrent avec deux biellettes de pliage articulées à leurs extrémités, d'une part au guide mobile sur les tubes arrières et d'autre part sur les tubes avant ; les les tubes avant sont reliés entre eux de manière rigide par un tube transversal plié en U et faisant office de repose pieds ; les tubes de l'arrière, sont reliés entre eux de manière rigide par un tube transversal plié en U, à proximité des roues. La nacelle de landau vient se brocher sur le support tubulaire du siège.

L'invention sera mieux comprise à la lecture de la description détaillée qui suit et à l'examen des dessins annexés qui représentent à titre d'exemple non limitatif un type de réalisation de l'invention.

la figure 1 est une vue de côté d'une forme de réalisation d'une poussette pliante suivant l'invention.

la figure 2 est une vue de côté de la poussette de la figure 1 lorsque celle-ci est pliée.

la figure 3 représente une vue de la poussette en position semi-ouverte pour la fonction de " Transat " ou siège auto.

les figures 4 et 5 donnent une vue schématique, respectivement de face et de côté, des supports moletés coulissant .

la figure 6 représente une vue en perspective d'un type de frein selon l'invention, permettant également de définir la position " Transat ".

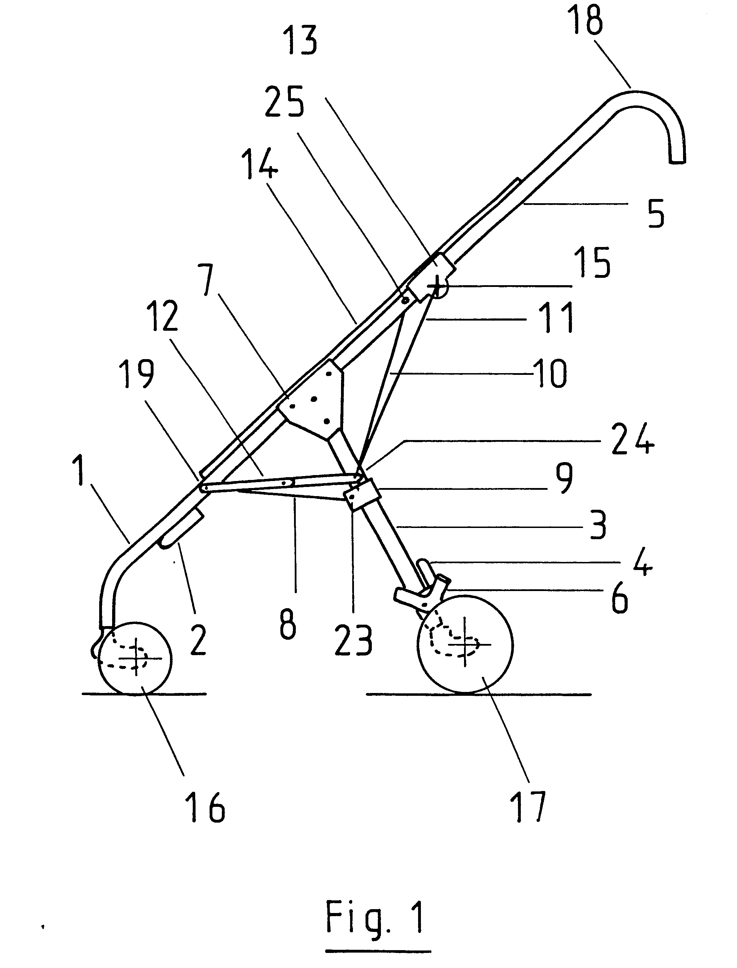

La figure 1 représente la poussette pliante transformable en landau ou en "Transat", constituée d'un ensemble de tubes en combinaison qui sont décrits ci-aprés :

Deux tubes avant 1 maintenus paralléles entre eux de manière rigide par une traverse 2 rivetée ou soudée, et qui fait également office de repose-pieds ; ces deux tubes avant 1 reçoivent chacun à leur extrémité inférieure une roue 16 ou une paire de roues pivotantes , et ils sont articulés à leur extrémité supérieure sur la chappe centrale 7 .

Deux tubes arrières 3 maintenus paralléles entre eux de manière rigide par une traverse 4 rivetée ou soudée dans la partie inférieure à proximité des roues. Ces deux tubes arrières 3 reçoivent dans leur extrémité inférieure des roues 17 qui peuvent être simples ou jumelées et montées de manière rigide ou sur suspension ; ils sont articulés à leur extrémité supérieure à la chappe centrale 7 .

Deux tubes supérieurs 5 cintrés à leur extrémité supérieure 18 pour faire canne, sont articulés à leur extrémité inférieure à la chappe centrale 7 .

Un élément tubulaire de chassis 14 en forme de U sert de support au siège ou à la nacelle du landau. Ce chassis 14 est fixé pivotant sur deux supports-moletés-coulissant 13 qui permettent de bloquer le siège suivant différentes inclinaisons. Les deux supports-moletés-coulissant 13 placés sur les tubes supérieurs 5 peuvent se déplacer sur ces derniers.

Deux biellettes de guidage 11 sont fixées à leurs extrémités inférieures sur les tubes arrières 3 dans leur partie supérieure au niveau des points d'ancrage 24 , et à leurs extrémités supérieures sur les supports-moletés-coulissant 13 au niveau des molettes de serrage 15 .

Deux biellettes 8 articulées d'une part sur les tubes avant 1 aux points 19 , et d'autre part sur les guides coulissant 9 aux points 23 , coopèrent avec deux autres biellettes 10 articulées d'une part sur les guides coulissant 9 aux points 23 , et d'autre part sur les tubes supérieurs 5 aux points 25 .

Deux compas de blocage 12 placés en liaison entre les tubes arrières 3 au niveau des points 24 , et les tubes avant 1 au niveau des points 19 , verrouillent le dispositif en position ouverte.

Deux plaquettes embouties , sensiblement en forme d'equerre 6 , et fixées sur les tubes arrières 3 au niveau inférieur à proximité des roues 17 ,font office de frein et de patte de verrouillage pour la position " Transat ".

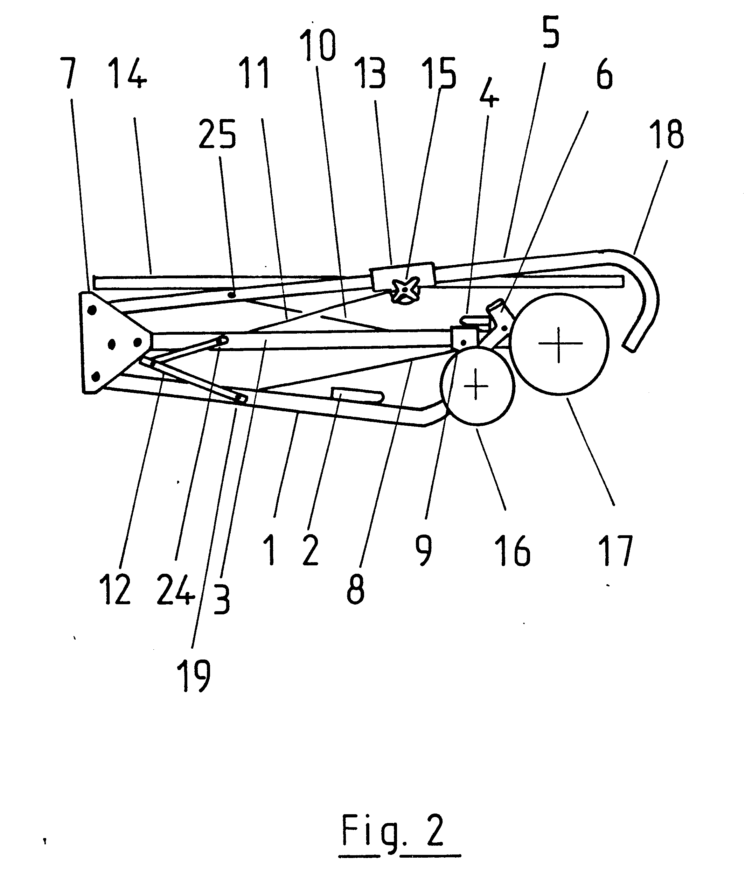

La figure 2 représente le dispositif en position repliée. On voit que les différents éléments tubulaires, à savoir les tubes supérieurs 5 , les tubes avant 1 et les tubes arrières 3 sont pliés en faisceau à partir de la chappe centrale 7 , et que les supports-moletés-coulissant 13 ainsi que les guides coulissant 9 se sont déplacés sous l'effet des différentes biellettes. L'ensemble des éléments du chassis est regroupé sous l'espace d'encombrement du siège fixé sur son chassis 14 .

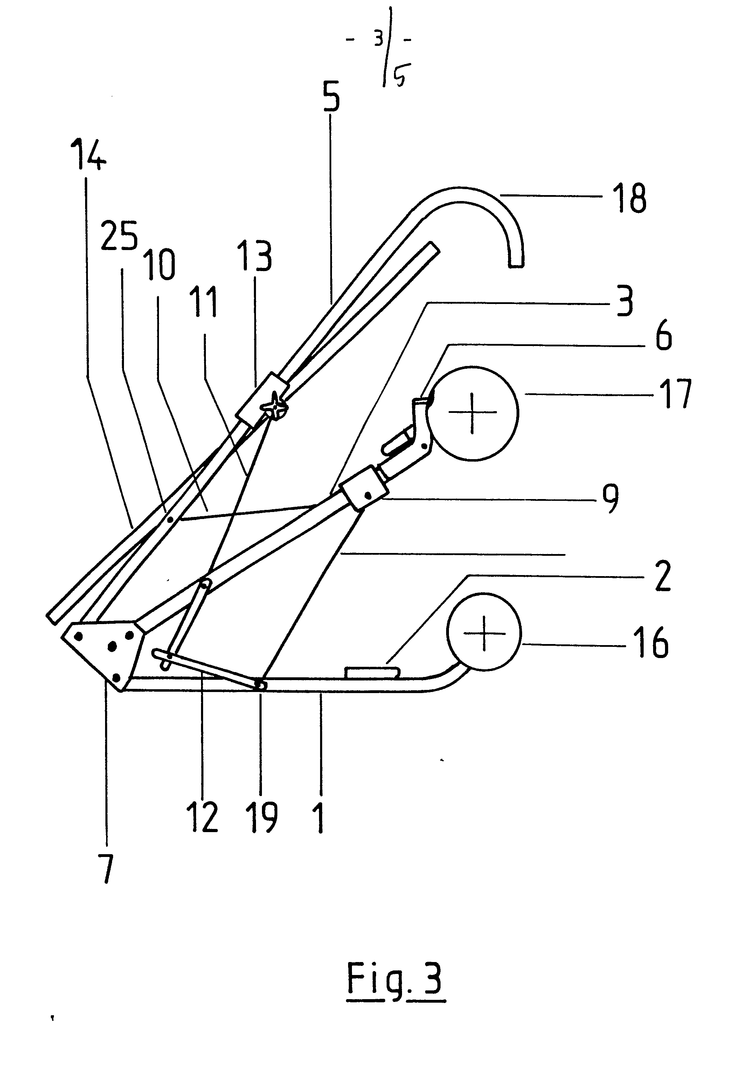

La figure 3 montre le dispositif en position " Transat " qui est la position de semi-ouverture . Les tubes 1 , 3 , 5 , sont en faisceau déployé. Le verrou-frein de blocage 6 est verrouillé, et le guide 9 coulissant sur le tube arrière 3 , vient en butée sur celui-ci.

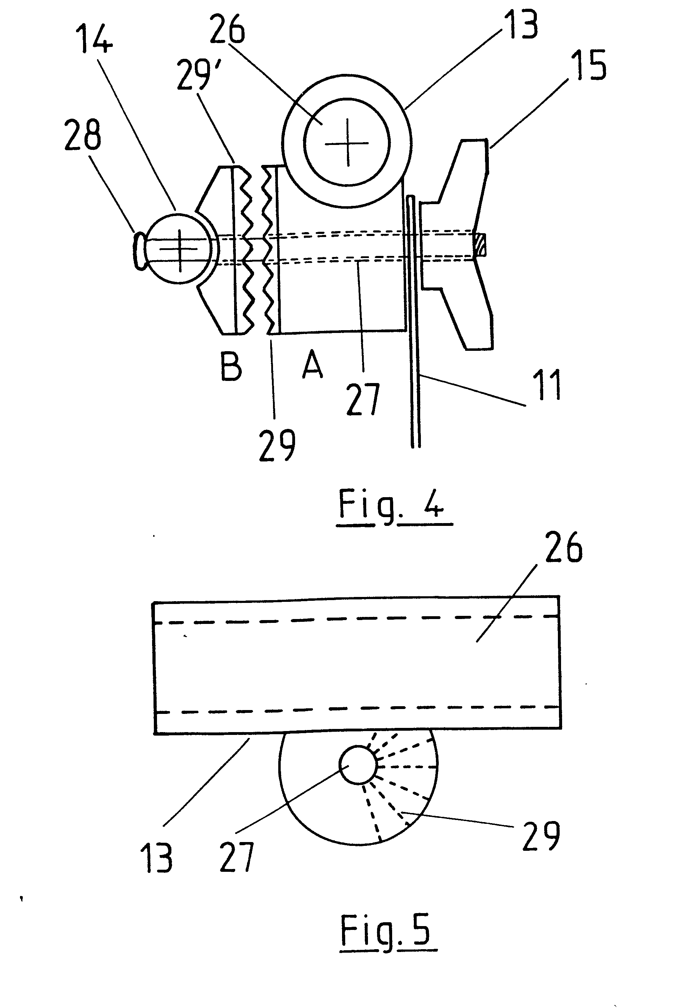

Les figures 4 et 5 représentent un mode de réalisation de support-moleté-coulissant 13 selon le brevet. Il sera avantageusement réalisé en matière plastique du genre nylon pour résister à l'usure mécanique. Il comprend un corps principal 13 en deux parties A et B . La partie A est dotée d'un alésage 26 permettant de coulisser sur le tube supérieur 5 . Un second alésage 27 , perpendiculaire au premier et réalisé sous celui-ci, débouche au centre d'un plan circulaire cranté 29 qui coopère avec la pièce B , également de forme circulaire crantée 29' . Cette partie B est rendu solidaire du tube 14 par un boulon 28 qui traverse l'alésage 27 et qui reçoit la biellette de guidage 11 et la molette de serrage 15 .

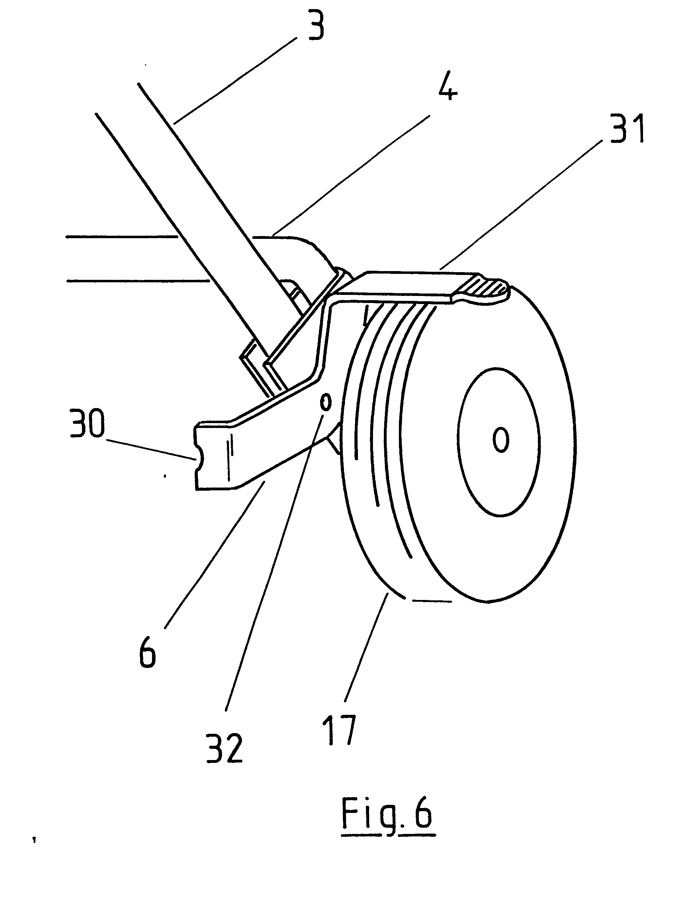

La figure 6 représente le verrou-frein de blocage réalisé à partir d'une plaque métallique découpée et pliée, se présentant sensiblement sous forme d'équerre 6 . Ce frein est articulé au niveau du point 32 sur le tube arrière 3 , à proximité de la fixation de la traverse 4 . Une patte est légèrement rabattue à son extrémité et porte un profil 30 qui coopère avec le tube 3 pour maintenir la position verrouillée. L'autre patte est rabattue plus largement pour venir en friction sur le pneumatique de la roue 17 au niveau 31 .

Le mécanisme ainsi constitué fonctionne de manière fort simple :

Lorsque l'ensemble est en position ouverte , selon la représentation schématique de la figure 1 , le dispositif est maintenu dans cette position par les compas de blocage 12 qui maintiennent en ouverture maximale l'angle formé par les tubes arrières 3 et les tubes avant 1 .

Dans cette postion de blocage , les biellettes 8 articulées sur les tubes avant 1 aux points 19 , et sur les guides 9 aux points 23 , maintiennent les guides 9 en position haute sur les tubes arrières 3 à proximité des axes 24 ; tandis que les biellettes 10 articulées aux guides 9 au niveau des points 23 et aux tubes supérieurs 5 au niveau des points 25 , maintiennent en position d'ouverture maximale l'angle formé par les tubes supérieurs 5 et les tubes arrières 3 .

Les biellettes de guidage 11 reliées d'une part aux tubes arrières 3 au niveau des points 24 , et d'autre part aux supports-moletés 13 maintiennent quant à elles lesdits supports à une position basse sur les tubes supérieurs 5 , de telle sorte que le siège ou la nacelle du landau soit à une hauteur adéquate par rapport au sol.

Le chassis du siège 14 peut alors , en coopération avec le système de molette qui est représenté figures 4 et 5 , être incliné de différentes manières et permet d'orienter le bébé, soit vers la maman, soit vers la route.
La stabilité de l'ensemble en position ouverte est bien assurée , car la charge placée dans le siège ou la nacelle du landau se répercute au niveau des supports-moletés 13 , et se transmet par l'intermédiaire des biellettes 11 aux points 24 sur les tubes arrières 3 à l'intérieur du quadrilatère de base défini par les roues 16 et 17 du dispositif.

Lors du pliage du dispositif, selon la figure 2 , l'opérateur laisse le siège dans la position assise, de telle sorte que l'élément de chassis 14 soit dans le plan défini par les tubes avant 1 et les tubes supérieurs 5 .
Il suffit alors de déverrouiller le mécanisme en tirant vers le haut sur les compas 12 , afin qu'ils ne soient plus en contrainte. et agir sur les tubes supérieurs 5 en appuyant au niveau des cannes 18. Ceci a pour effet de refermer l'angle formé par les tubes supérieurs 5 et les tubes arrières 3 .

Simultanément , et sous l'effet des biellettes 10 reliant les tubes 5 aux guides 9 , ces derniers coulissent vers le bas sur les tubes arrières 3 , ce qui a pour effet de ramener les tubes avant 1 vers les tubes arrières 3 sous l'action des biellettes 8 reliant les guides 9 aux tubes avant 1 .

Dans le même temps, les biellettes de guidage 11 reliant les tubes arrières 3 aux supports-moletés 13, repoussent ces derniers vers le haut des tubes supérieurs 5 afin de regrouper tous les éléments tubulaires sous l'espace d'encombrement du siège 14 .

Lorsque le mécanisme est ainsi plié, il peut être placé sur le sol en position verticale, en reposant sur les chappes centrales de pliage 7.

Pour l'ouverture du dispositif, il faut saisir dans chaque main une poignée 18, et maintenir avec un pied le tube transversal 4 vers le bas, puis ouvrir le mécanisme en tirant les poignées 18 vers le haut.

Sous l'action combinée des biellettes 8 et 10 coopérant avec les guides 9, le chassis s'ouvrira en position d'utilisation, tandis que l'élément de chassis 14, sous l'effet des biellettes de guidage 11 coulissera vers le bas sur les tubes supérieurs 5 jusqu'à sa position adéquate.

Il reste alors à verrouiller les compas 12, en les poussant vers le bas, ce qui aura pour effet d'amener les guides 9 en butée sur les axes 24 .

Lorsque le dispositif est replié selon la figure 2 , on peut le verrouiller dans cette position pour le transporter. Pour cela, il suffit de bloquer les deux freins aprés fermeture du dispositif.

En effet, en position repliée, les guides 9 se trouvent repoussés vers l'extrémité inférieure des tubes arrières 3 ; en actionnant les freins 6 , les extrémités 30 des freins se verrouillent sur les tubes 3 en avant des guides 9 et empêchent ces derniers de coulisser vers le haut des tubes 3 . De ce fait le mécanisme ne peut s'ouvrir par erreur lorsqu'on le transporte.

La particularité de la position " Transat " selon la figure 3 est obtenue en verrouillant le dispositif en position de semi-ouverture grâce au verrouillage du frein 6 avant le repliage du dispositif. En effet, lorsque le dispositif selon l'invention est à moitié ouvert, les guides 9 coopèrent avec les biellettes 8 et 10 et peuvent être bloqués à cette position par les extrémités 30 des freins 6 . Le bébé peut ainsi être placé dans son siège transformé en " Transat " ou en siège auto.

La présente invention offre l'avantage d'une poussette réversible qui est pliante à plat, transformable en landau, en transat et en siège auto, dont tous les éléments tubulaires du chassis se logent à l'état plié sous l'espace d'encombrement du siège.

Ceci permet un encombrement réduit au maximum ( 48 cm x 69 cm x 25 cm ) , et permet de loger aisément l'ensemble dans un coffre de petite voiture.

D'autre part, la conception simplifiée du dispositif permet d'obtenir un prix de revient trés compétitif au niveau de l'usinage et du montage.

Revendications

1. Dispositif de chassis de poussette pliante à plat transformable en landau, caractérisé en ce qu'il comporte en combinaison des tubes avant ( 1 ) maintenus paralléles et articulés à leur partie supérieure à une chappe centrale de pliage ( 7 ) ; des tubes arrières ( 3 ) maintenus paralléles entre eux et articulés à leur partie supérieure à la chappe centrale de pliage ( 7 ) ; des tubes supérieurs ( 5 ) maintenus paralléles entre eux et articulés à leur partie inférieure à la chappe centrale de pliage ( 7 ) ; un tube ( 14 ) en forme de U supportant le siège ou la nacelle du landau, fixé sur des supports-moletés ( 13 ) coulissant sur les tubes supérieurs ( 5 ) en coopérant avec des biellettes de guidage ( 11 ) reliées aux tubes arrières ( 3 ) ; des biellettes ( 8 ) et ( 10 ) reliant respectivement les tubes avant ( 1 ) et les tubes supérieurs ( 5 ) à des guides mobiles ( 9 ) placés sur les tubes arriè-res ( 3 ) ; des compas de blocage ( 12 ) reliant les tubes avant ( 1 ) aux tubes arrières ( 3 ) ; des verrous-frein ( 6 ) articulés aux extrémités des tubes arrières ( 3 ) et agissant différemment au niveau des roues ( 17 ) et des guides mobiles ( 9 ).

2. Dispositif selon la revendication 1 , caractérisé en ce que les tubes avant ( 1 ) sont maintenus paralléles entre eux de manière rigide par une barre transversale ( 2 ) solidarisée par rivetage ou soudure, et qui fait également office de repose pieds pour l'enfant.

3. Dispositif selon la revendication 1 , caractérisé en ce que les tubes arrières ( 3 ) sont maintenus paralléles entre eux par une barre transversale ( 4 ) solidarisée par rivetage ou soudure, placée dans la partie inférieure à proximité des roues, et qui fait également fonction de poignée pour transporter la poussette à l 'état pliée.

4. Dispositif selon la revendication 1 , caractérisé en ce que les tubes supérieurs sont maintenus paralléles entre eux par l'intermédiaire des supports-moletés ( 13 ) solidaires de l'élément de chassis ( 14 ) en forme de U supportant le siège.

5. Dispositif selon la revendication 1 , caractérisé en ce que la chappe centrale de pliage ( 7 ) qui reçoit en articulation les tubes

0080962

- 9 -

avant ( 1 ), les tubes arrières ( 3 ) et les tubes supérieurs ( 5 ), se également de sabot permettant de placer la poussette en équilibre en position verticale à l'état pliée.

6. Dispositif selon la revendication 1 , caractérisé en ce que les supports-moletés ( 13 ) qui servent de fixation du chassis ( 14 ) sur les tubes supérieurs ( 5 ), comportent également le dispositif de verrouillage d'inclinaison du siège. Ils seront avantageusement réalisés en matière plastique, et comprennent chacun un corps principal ( 13 ) en deux parties A et B . La partie A est dotée d'un alésage ( 26 ) permettant de coulisser sur le tube supérieur ( 5 ). Un second alésage ( 27 ) , perpendiculaire au premier et réalisé sous celui-ci , débouche au centre d'un plan circulaire cranté ( 29 ) qui coopère avec la pièce B , également de forme circulaire crantée ( 29' ) . Cette partie B est rendue solidaire du tube ( 14 ) par un boulon ( 28 ) qui traverse l'alésage ( 27 ) et qui reçoit la biellette de guidage ( 11 ) et la molette de serrage ( 15 ) .

7. Dispositif selon la revendication 1 , caractérisé en ce que les supports-moletés ( 13 ) sont guidés par les biellettes ( 11 ) vers le haut des tubes supérieurs ( 5 ) lors du pliage du dispositif pour regrouper les éléments tubulaires ensemble, et sont ramenés vers le bas des tubes supérieurs ( 5 ) lors de l'ouverture du mécanisme.

8. Dispositif selon la revendication 1 , caractérisé en ce que les biellettes ( 8 ) et ( 10 ) coopèrent avec les guides ( 9 ) qui coulissent sur les tubes arrières ( 3 ) lors de l'ouverture ou de la fermeture du mécanisme pour opérer simultanément le déploiement des tubes avant ( 1 ) et des tubes supérieurs ( 5 ) par rapport aux tubes arrières ( 3 ) .

9. Dispositif selon la revendication 1 , caractérisé en ce que les compas de blocage ( 12 ) articulés d'une part aux points ( 19 ) sur les tubes avant ( 1 ), et d'autre part aux points ( 24 ) sur les tubes arrières ( 3 ) , tendent lors du verrouillage, à ouvrir l'angle formé par les tubes ( 1 ) et ( 3 ) au delà de la valeur admise par la chappe ( 7 ), et coopèrent avec les biellettes ( 10 ) et ( 8 ) pour amener les guides mobiles ( 9 ) en butée sur les points ( 24 ). Les compas maintenus ouverts en contrainte empêchent la fermeture du mécanisme.

10. Dispositif selon la revendication 1 , caractérisé en ce que le mécanisme de frein assure d'une part la fonction de blocage des roues ( 17 ) , et d'autre part le verrouillage du dispositif en position transat selon l'emploi. Ils se composent chacun d'une pièce sensiblement en forme d'équerre ( 6 ) articulée au point ( 32 ) sur les côtés des tubes arrières ( 3 ). L'une des extrémités légèrement repliée porte une échancrure ( 30 ) qui coopère avec le tube arrière ( 3 ) pour le ver - rouillage, tandis que l'autre extrémité repliée ( 31 ) vient en friction sur le pneumatique de la roue ( 17 ) . En position transat , les guides mobiles ( 9 ) coulissant sur les tubes arrières ( 3 ) viennent en butée sur les extrémités repliées ( 30 ) , ce qui bloque le mécanisme en position semi-ouverte en limitant le déplacement des guides ( 9 ) .

0080962

$-\dfrac{1}{5}-$

Fig. 1

0080962

- 2/5 -

7  14      11  10  13  15      5

25            4        6      18

12  24/3

19            1  2      9  16  17

8

Fig. 2

0080962

Fig. 3

Fig. 4

Fig. 5

0080962

- 5/5 -

Fig.6

Office européen des brevets

**RAPPORT DE RECHERCHE EUROPEENNE**

**0080962**
Numéro de la demande

EP 82 44 0041

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|-----------|--------------------------------------------------------------------------------|------------------------|----------------------------------------|
| | --- | | B 62 B    7/10 |
| A | FR-A-2 267 918   (UNILANDO) *Page 4, lignes 15-26; figures 1,2* | 1-3 | |
| | --- | | |
| A | FR-A-2 244 348   (DUVIGNACQ) *Page 3, ligne 22 - page 5, ligne 2; figures 1-3* | 1-3 | |
| | --- | | |
| A | US-A-3 797 848   (BURNHAM) *Colonne 2, ligne 49 - colonne 5, ligne 10; figures 1-8* | 1-3 | |
| | --- | | |
| A | FR-A-2 464 172   (BABY RELAX) *En entier* | 1,4 | |
| | --- | | DOMAINES TECHNIQUES RECHERCHES (Int. Cl. ³) |
| A | FR-A-1 346 197   (MEDARD) *En entier* | 1 | |
| | ----- | | B 62 B |

Le présent rapport de recherche a été établi pour toutes les revendications

| Lieu de la recherche | Date d'achèvement de la recherche | Examinateur |
|----------------------|-----------------------------------|-------------|
| LA HAYE | 24-01-1983 | NADELHOFFER J. |